**Europäisches Patentamt**

**European Patent Office**

**Office européen des brevets**

(19)

(11) Veröffentlichungsnummer: **0 302 818**
A2

(12) # EUROPÄISCHE PATENTANMELDUNG

(21) Anmeldenummer: **88730172.9**

(51) Int. Cl.4: **F 16 G 11/00**

(22) Anmeldetag: **03.08.88**

(30) Priorität: **07.08.87 DE 3726738**

(43) Veröffentlichungstag der Anmeldung:
**08.02.89 Patentblatt 89/06**

(84) Benannte Vertragsstaaten:
**AT DE FR GB IT SE**

(71) Anmelder: **RUD-Kettenfabrik Rieger & Dietz GmbH u. Co.**
**Friedensinsel**
**D-7080 Aalen 1 (DE)**

(72) Erfinder: **Smetz, Reinhard, Dipl.-Ing. (FH)**
**Silcherstrasse 17**
**D-8860 Baldingen (DE)**

(74) Vertreter: **Böning, Manfred, Dr. Ing. et al**
**Patentanwälte Dipl.-Ing. Dieter Jander Dr. Ing. Manfred Böning Kurfürstendamm 66**
**D-1000 Berlin 15 (DE)**

(54) **Verbindungsorgan.**

(57) Bei einem Verbindungnsorgan für Gurte, Kettenglieder und/oder andere Bauteile werden insbesondere zur Erleichterung der Handhabbarkeit ein Grundkörper (1) und ein Schließelement (2) an einer ersten Verbindungsstelle unter Einsatz eines Schwenkverschlusses miteinander verbunden, der aus einem Schwenkanker (19) und einer mit einem Führungsschlitz für den Schwenkanker (19) versehenen Lagermulde (26) besteht. Zur Sicherung der Lage des in die Lagermulde (26) einhängbaren Schwenkankers (19) in der Lagermulde (26) dient eine einen Haltebolzen (16) und eine Lasche (9) sowie eine die Lasche (9) umgreifende Gabel aufweisende zweite Verbindungsstelle.

Fig.1

EP 0 302 818 A2

**Beschreibung**

**Verbindungsorgan**

Die Erfindung betrifft ein Verbindungsorgan für mindestens zwei miteinander zu verbindende Bauteile, wie Gurte, Gurtschlingen, Seile, Seilschlingen, Kettenglieder, Haken, Ringe od.dgl., mit einer Aufnahme für mindestens eines der Bauteile, die vom Grundkörper des Verbindungsorganes sowie einem Schließelement gebildet wird, dessen eines Ende durch einen in fluchtende Bohrungen sich überlappender Teile des Grundkörpers und des Schließelementes einführbaren Haltebolzen mit dem Grundkörper verbindbar ist und dessen anderes Ende durch eine Schwenklager mit dem Grundkörper verbindbar ist, das einen Querbalken aufweist, auf dem das Schließelement schwenkbar gelagert ist.

Aus der Figur 4 der DE-OS 27 28 786 ist ein Verbindungsorgan der in Betracht gezogenen Art für Gurte bekannt, das von einem etwa rechteckigen Ring mit abgerundeten Ecken und einer an einer Schmalseite des Ringes angeordneten Einführöffnung für die Gurte gebildet wird. Zum Verschließen der Einführöffnung dient in diesem Fall mindestens ein plattenförmiges Schließelement, dessen eines Ende schwenkbar auf einem Stift am einen der die Einführöffnung begrenzenden Enden des Verbindungsorganes gelagert ist. Das andere Ende des Schließelementes bildet eine Hakenöffnung, in die bei in die Schließlage geschwenktem Schließelement ein Sicherungsstift eintreibbar ist, der außerdem in einer Bohrung des Verbindungsorganes gehalten wird.

Bei einem anderen aus der DE-PS 940 438 bekannten Verbindungsorgan für Kettenglieder bilden die Enden eines im wesentlichen C-förmigen Grundkörpers Laschen mit Bohrungen für Verbindungsstifte, durch die die Laschen mit fluchtende Bohrungen aufweisenden, gabelförmigen Enden eines H-förmigen Schließelementes verbindbar sind.

Bei beiden bekannten Konstruktionen bedarf es in der Praxis zusätzlicher Mittel, um die jeweiligen Verbindungsstifte in der Schließstellung zu sichern, wobei sich als Mittel der Wahl Spannhülsen erwiesen haben, die ihrerseits wie die Verbindungsstifte in durch spanabhebende Verfahren hergestellte Bohrungen gehalten werden. Das Ausmaß der spanabhebenden Bearbeitung und auch die vergleichsweise umständliche Handhabung der bekannten Verbindungsorgane beim Schließen und Öffnen vermögen nicht voll zu befriedigen.

Der Erfindung liegt die Aufgabe zugrunde, ein Verbindungsorgan der in Betracht gezogenen Art zu schaffen, das den Anforderungen einer Massenfertigung genügt und leicht sowie bequem handhabbar ist. Diese Aufgabe wird erfindungsgemäß dadurch gelöst, daß bei einem gattungsgemäßen Verbindungsorgan der Querbalken des Schwenklagers unlösbar mit dem Grundkörper verbunden ist und das Schließelement nur in ausgeschwankter Stellung in dieses einhängbar ist.

Das erfindungsgemäße Verbindungsorgan läßt sich durch. die Verwendung des aus ineinander einhängbaren Teilen bestehenden Schwenklagers äußerst einfach handhaben. Es kann mit denkbar geringem Zerspanungsaufwand durch Verfahren der Umformtechnik hergestellt werden. Die Gefahr, daß sich an den Verbindungsstellen des Schließelementes und des Grundkörpers des Verbindungsorganes Passungsrost bildet, ist auf ein Minimum reduziert. Die ineinander eingehängten Teile des Schwenklagers sind durch den in die Bohrungen der sich überlappenden Teile einführbaren Haltebolzen in der eingehängten Stellung verriegelbar.

Weitere Einzelheiten und Merkmale der Erfindung ergeben sich aus den Unteransprüchen und der nachfolgenden Beschreibung mehrerer in der beigefügten Zeichnung dargestellter vorteilhafter Ausführungsbeispiele, die die Vielfalt der Anwendungsmöglichkeit des Erfindungsgedankens verdeutlichen. Es zeigen:

Fig. 1 die Vorderansicht eines ersten Verbindungsorganes,

Fig. 2 einen Schnitt längs der Linie II-II in Fig. 1,

Fig. 3 eine Seitenansicht des Verbindungsorganes gemäß Fig. 1 mit einem Teilschnitt längs der Linie III-III in Fig. 1,

Fig. 4 die Vorderansicht eines zweiten Verbindungsorganes,

Fig. 5 einen Schnitt längs der Linie V-V in Fig. 4,

Fig. 6 eine Seitenansicht des Verbindungsorganes gemäß Fig. 4 mit einem Teilschnitt längs der Linie VI-VI in Fig. 4,

Fig. 7 die Vorderansicht eines dritten Verbindungsorganes,

Fig. 8 einen Schnitt längs der Linie VIII-VIII in Fig. 7,

Fig. 9 eine Seitenansicht des Verbindungsorganes gemäß Fig. 7 mit einem Teilschnitt längs der Linie IX-IX in Fig. 7,

Fig. 10 die Vorderansicht eines vierten Verbindungsorganes,

Fig. 11 einen Schnitt längs der Linie XI-XI in Fig. 10,

Fig. 12 eine Seitenansicht des Verbindungsorganes gemäß Fig. 10 mit einem Teilschnitt längs der Linie XII-XII in Fig. 10,

Fig. 13 die Vorderansicht eines fünften Verbindungnsorganes,

Fig. 14 die Vorderansicht eines sechsten Verbindungsorganes,

Fig. 15 die Vorderansicht eines siebten Verbindungsorganes,

Fig. 16 die Vorderansicht eines achten Verbindungsorganes,

Fig. 17 eine in einen Lasthaken eingehängte, mit Verbindungsorganen gemäß Fig. 15 und 16 zusammengestellte Gurtschlaufe,

Fig. 18 die Vorderansicht eines neunten Verbindungnsorganes,

Fig. 19 einen Schnitt längs der Linie XIX-XIX in Fig. 18,

Fig. 20 die Seitenansicht des Verbindungsorganes gemäß Fig. 18 mit einem Teilschnitt längs der Linie XX-XX in Fig. 18,

Fig. 21 die Vorderansicht eines zehnten Verbindungsorganes und

Fig. 22 einen Schnitt längs der Linie XXII-XXII in Fig. 20.

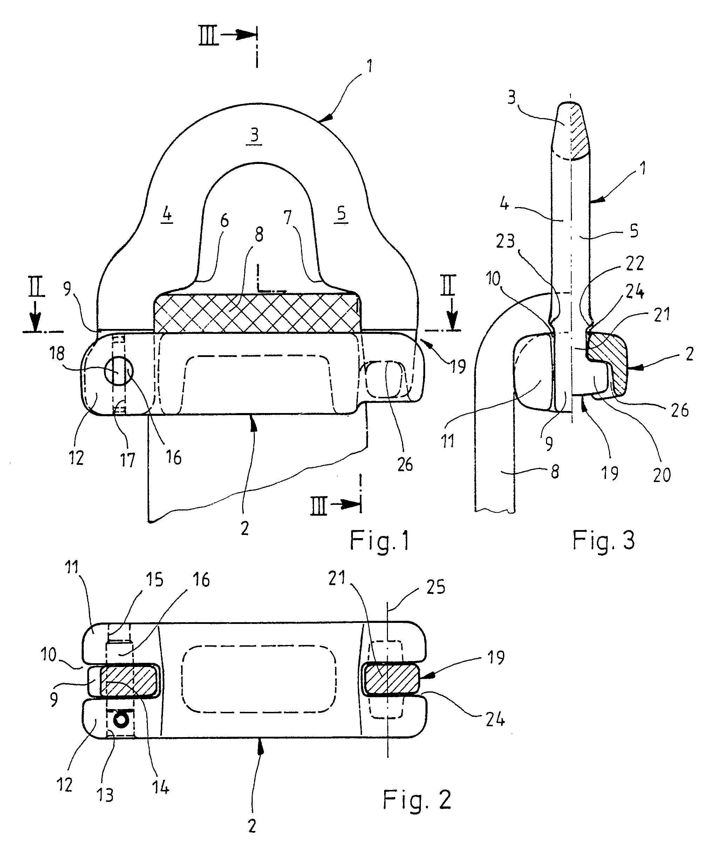

Das in den Fig. 1 bis 3 dargestellte Verbindungsorgan weist einen bügelförmigen Grundkörper 1 und ein gerades Schließelement 2 großer Steifigkeit auf. Der Grundkörper 1 besitzt ein Joch 3 und zwei sich hieran anschließende Schenkel 4 und 5. Der Abstand zwischen den Schenkeln 4 und 5 des Grundkörpers 1 vergrößert sich in der Nähe der Schenkelenden sprungartig unter Bildung von Führungsnasen 6 und 7, die verhindern, daß eine sich auf dem Schließelement 2 abstützende Gurt- oder Seilschlinge 8 sich in den Bereich des Joches 3 verlagert. In das Joch 3 lassen sich je nach Bedarf ein Aufhängeglied, ein Zwischenglied, ein Haken, eine Kette od.dgl. einhängen.

Die Enden der Schenkel 4,5 des Grundkörpers 1 sind mit den Enden des Schließelementes 2 auf unterschiedliche, die Handhabung des Verbindungsorganes besonders einfach gestaltende Weise verbunden.

Das Ende des Schenkels 4 bildet eine Lasche 9, die in eine Aussparung 10 greift, welche von den Zinken 11 und 12 einer Gabel begrenzt wird, die an der Unterseite des Schließelementes 2 auch geschlossen sein könnte. Die Lasche 9 und die Zinken 11,12 der Gabel weisen fluchtende Bohrungen 13,14,15 auf, von denen die Bohrung 15 in der Zinke 11 als Stufenbohrung ausgebildet ist. In den Bohrungen 13,14,15 ruht mit leichtem Spiel, d.h. leicht einführbar und wieder entfernbar, ein Haltebolzen 16, der durch einen als Spannhülse ausgebildeten, in eine Querbohrung 17 eingeschlagenen Sicherungsstift 18 und die Schulter der Stufenbohrung 15 gegen Verlust gesichert ist. Der Sicherungsstift 18 und die Schultern der Stufenbohrung 15 bilden mit anderen Worten Anschläge für den Haltebolzen 16.

Das Ende des Schenkels 5 formt einen im wesentlichen T-förmigen Schwenkanker 19 mit einem zwei Schwenkzapfen bildenden Querbalken 20 und einem flachen Längsbalken 21, an dessen dem Querbalken 20 abgewandten Ende sich Führungsschultern 22 und 23 befinden, die über einen Führungsschlitz vorstehen, der sich im dem Ende des Schenkels 5 zugeordneten Ende des Schließelementes 2 befindet und senkrecht zur Schwenkachse 25 des Schwenkankers 19 orientiert ist. Die Führungsschultern 22,23 verhindern ein Eintauchen des Grundkörpers 1 während der Schwenkbewegung beim Schließen des Verbindungsorganes. Der Querbalken 20 des Schwenkankers 19 ist mit seinen Schwenkzapfen in einer an der Unterseite des Schließelementes 2 offenen Lagermulde 26 gelagert, die eine inh völlig aufnehmende Tasche bildet.

Um der Gurt- oder Seilschlinge 8 eine gute Auflage zu geben, ist die Breite B des Schließelementes 2 nicht nur im Bereich der Enden des Schließelementes, sondern auch im Stützbereich größer als die Breite b des Grundkörpers 1. Das Schließelement 2 übernimmt so gewissermaßen die Funktion einer Kausche.

Sowohl der Grundkörper 1 als auch das Schließelement 2 sind Schmiedeteile, bei denen lediglich die Bohrungen 13,14,15 und 17 eine spanabhebende Bearbeitung erfordern.

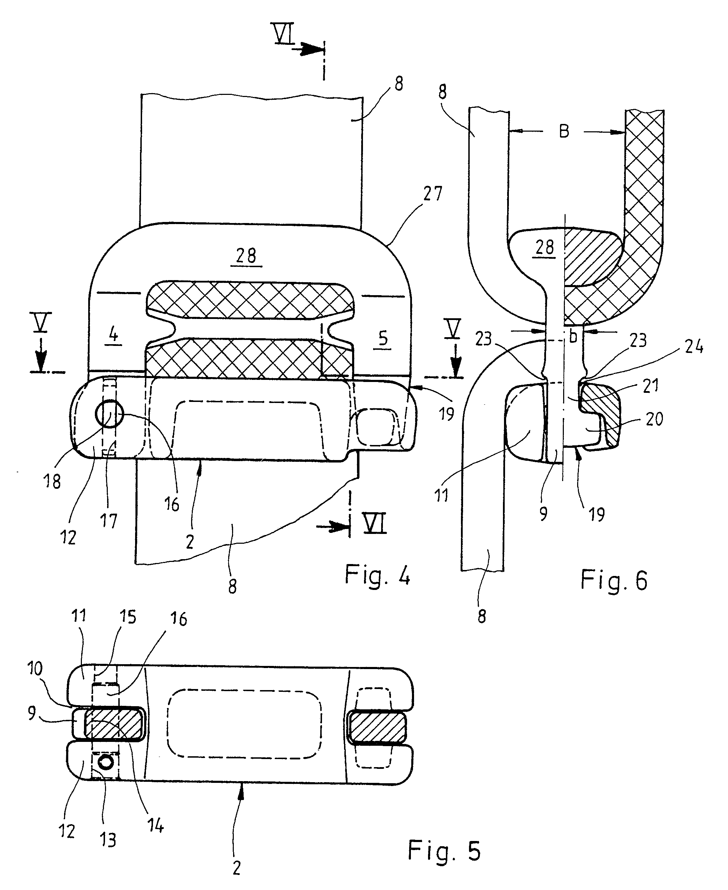

Während bei dem Ausführungsbeispiel gemäß Fig. 1 bis 3 lediglich das Schließelement 2 als Stützbalken für eine Gurt- oder Seilschlinge ausgebildet ist, zeigen die Fig. 4 bis 6 eine Lösung mit einem im wesentlichen U-förmigen Grundkörper 27, dessen Joch 28 ebenfalls einen Stützbalken für eine Gurt- oder Seilschlinge 8 formt, der hinsichtlich seines einseitigen Schwenkverschlusses und zahlreicher weiterer Einzelheiten allerdings voll mit der zuvor beschriebenen Lösung übereinstimmt und mithin keiner zusätzlichen Erörterung bedarf. Als besonders vorteilhaft erweist sich in diesem Fall die gedrungene und stabile Bauweise des Verbindungsorganes.

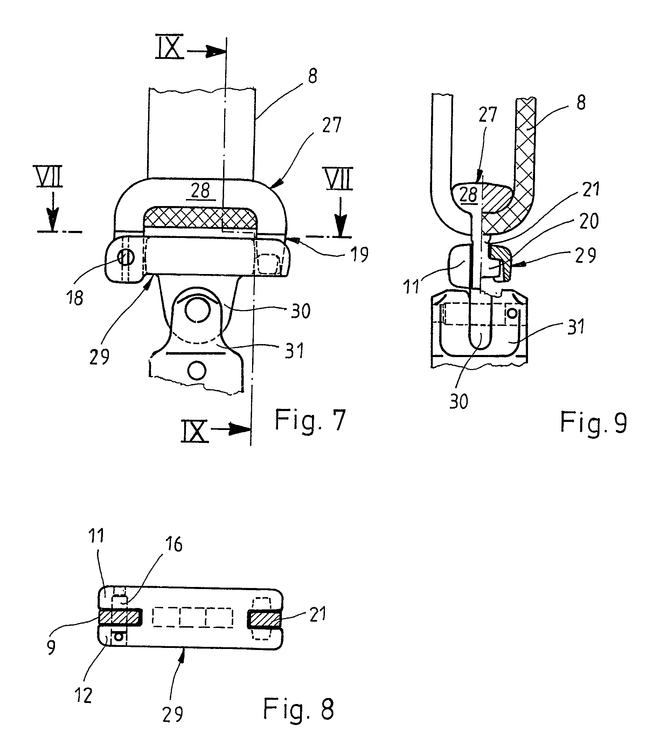

Auch die weiteren in den Fig. 7 bis 20 dargestellten Ausführungsformen entsprechen im Grundaufbau dem Verbindungsorgan gemäß den Fig. 1 bis 3, auf deren Beschreibung daher wiederum weitgehend verwiesen werden kann. Im folgenden werden ergänzend lediglich einige Besonderheiten erörtert.

Die Fig. 7 bis 9 zeigen ein Verbindungsorgan mit einem Grundkörper 27 der in den Fig. 4 bis 6 gezeigten Art. Das Schließelement 29 dieser Konstruktion ist mit einer Anschlußöse 30 für einen mit einer Anschlußgabel 31 ausgestatteten Adapter 32 versehen.

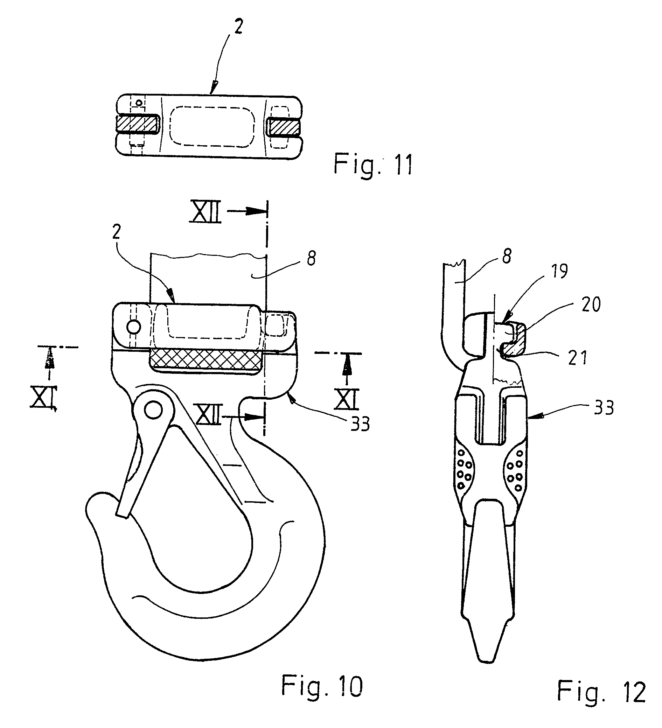

Bei dem Verbindungsorgan nach den Fig. 10 bis 12 findet ein als Haken ausgebildeter Grundkörper 33 Verwendung, während das Schließelement 2 den gleichen Aufbau wie beim Verbindungsorgan nach den Fig. 1 bis 3 hat.

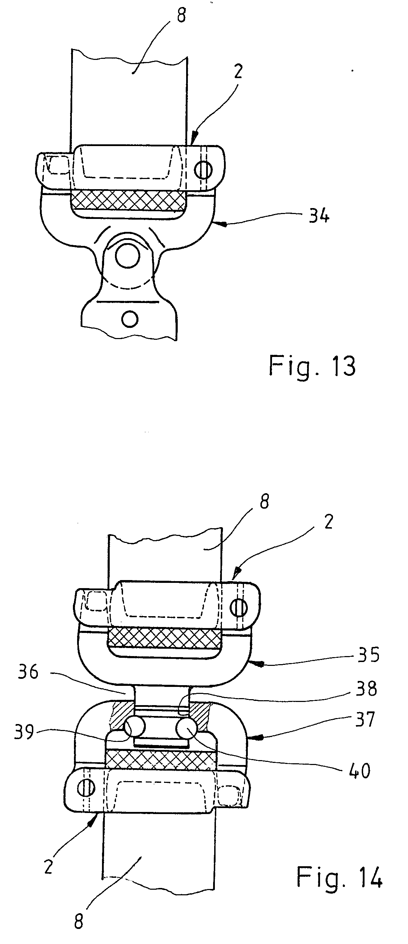

Fig. 13 stellt ein Gegenstück zu Fig. 7 dar. Während im Fall der Fig. 7 das Schließelement 29 mit einer Anschlußöse 30 versehen und in den Grundkörper 27 eine Gurt-oder Seilschlinge 8 eingehängt ist, weist bei dem Verbindungsorgan gemäß Fig. 13 der Grundkörper 34 eine Anschlußöse 30 für einen mit einer Anschlußgabel 31 versehenen Adapter 32 auf.

Die Fig. 14 zeigt eine Kombination zweier Verbindungsorgane, von denen eines einen Grundkörper 35 mit einem Anschlußzapfen 36 und eines einen Grundkörper 37 mit einer Anschlußbohrung 38 und einer Laufrille 39 für Kugeln 40 aufweist.

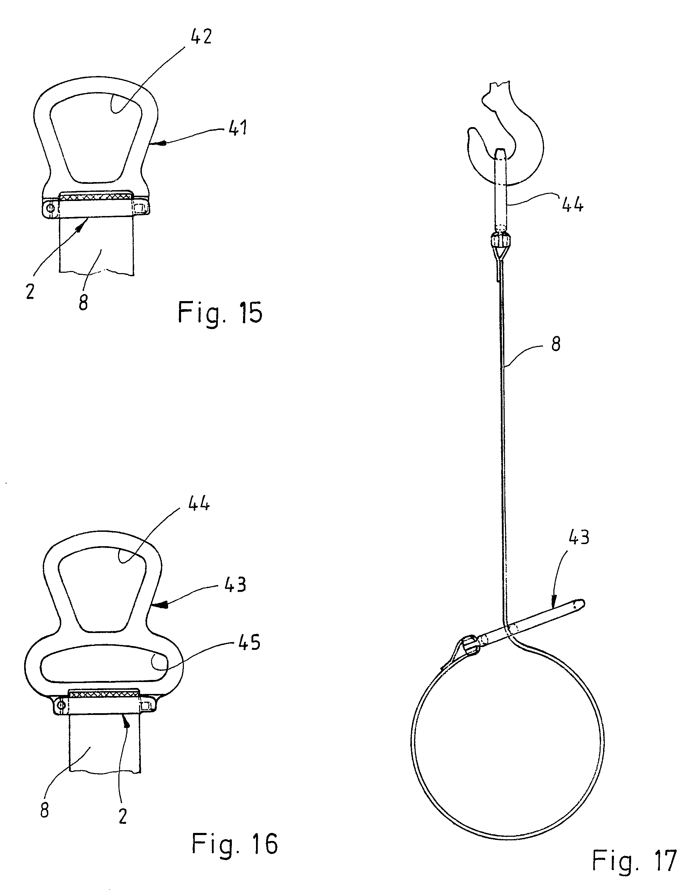

In den Fig. 15 und 16 sind zwei Verbindungsorgane dargestellt, von denen eines einen Grundkörper 41 mit einer Einhängeöse 42 und eines einen Grundkörper 43 mit einer Einhängeöse 44 und einer Führungsöse 45 besitzt. Wie die beiden Verbindungsorgane gemäß den Fig. 15 und 16 eingesetzt werden können, ergibt sich aus der Fig. 17.

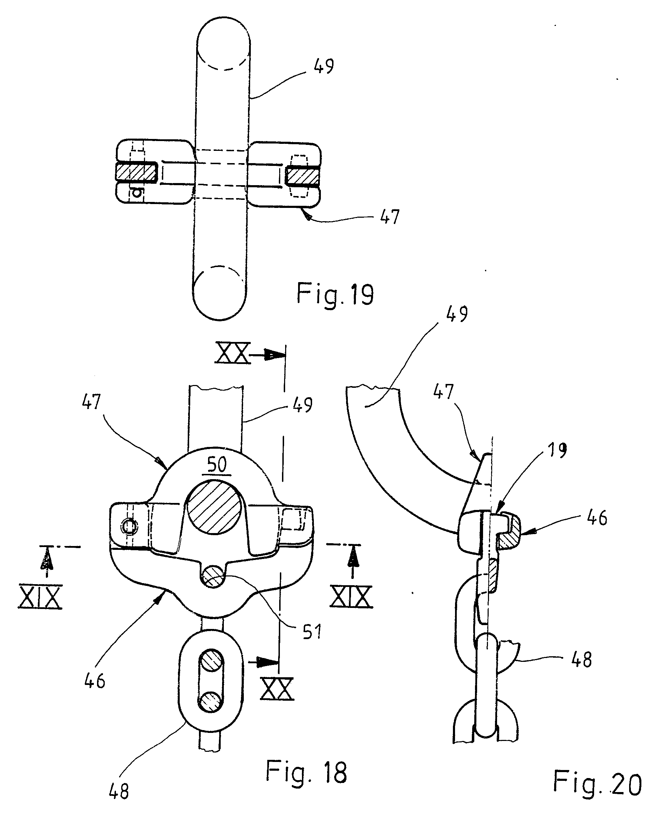

Daß der Einsatzbereich von Verbindungsorganen der zur Diskussion stehenden Art nicht auf Gurtverbindungen beschränkt ist, lehren die Fig. 18 und 19, in denen ein Verbindungsorgan mit einem Grundkörper 46 und einem Schließelement 47 dargestellt ist, das zum Anschluß eines Kettenstranges 48 an eine Aufhängeglied 49 dient. Das Joch 50 des Schließelementes 47 kann hier wie eine in den Grundkörper 46 eingearbeitet Führungsrille 51 zur tragkraftmäßigen Zuordnung mehrerer Kettenstränge zu einem Aufhängeglied genutzt werden.

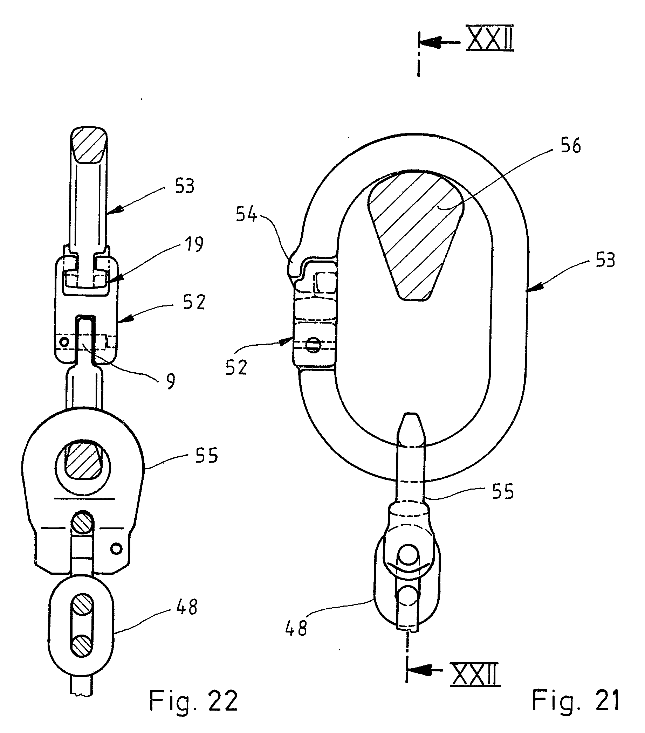

In den Fig. 21 und 22 schließlich ist ein Ausführungsbeispiel dargestellt, bei dem ein Schließelement 52 die Einführöffnung eines als Ring ausgebildeten Grundkörpers 53 schließt. Auch in diesem Falle bilden die Enden des Grundkörpers 53 eine Lasche 9 und einen Schwenkanker 19. Zur Sicherung des Schließelementes 52 in der Schließlage ist am dem Schwenkanker 19 zugeordneten Ende des Grundkörpers 53 eine Sicherungsnase 54 angeordnet. In den Grundkörper 53 ist eine sogenannte Ringgabel 55 eingehängt, die zum Anschluß eines Kettenstranges 48 dient. Mit 56 ist der Querschnitt eines Lasthakens bezeichnet, in den der Grundkörper 53 einhängbar ist.

## Patentansprüche

1. Verbindungsorgan für mindestens zwei miteinander zu verbindende Bauteile, wie Gurte, Gurtschlingen, Seile, Seilschlingen, Kettenglieder, Haken, Ringe od.dgl., mit einer Aufnahme für mindestens eines der Bauteile, die vom Grundkörper (1,27,33,34,35,37,41,43,46,53) des Verbindungsorganes sowie einem Schließelement (2,29,47, 52) gebildet wird, dessen eines Ende durch einen in fluchtende Bohrungen (13,14,15) sich überlappender Teile des Grundkörpers (1,27,33,34,35,37,41,43,46,53) und des Schließelementes (2,29,47,52) einführbaren Haltebolzen (16) mit dem Grundkörper (1,27,33,34,35,37,41,43,46,53) verbindbar ist und dessen anderes Ende durch ein Schwenklager mit dem Grundkörper (1,27,33,34,35,37,41,43,46,53) verbindbar ist, das einen Querbalken (20) aufweist, auf dem das Schließelement (2,29,47,52) schwenkbar gelagert ist, dadurch gekennzeichnet, daß der Querbalken (20) des Schwenklagers unlösbar mit dem Grundkörper (1,27,33, 34,35,37,41,43,46,53) verbunden ist und das Schließelement (2,29,47,52) nur in ausgeschwenkter Stellung in dieses einhängbar ist.

2. Verbindungsorgan nach Anspruch 1, dadurch gekennzeichnet, daß die sich überlappenden Teile von einer Lasche (9) und den Zinken (11,12) einer diese umgreifenden Gabel gebildet werden.

3. Verbindungsorgan nach Anspruch 1 oder 2, dadurch gekennzeichnet, daß das Schwenklager von einer Lagermulde (26) une einem Schwenkanker (19) gebildet wird.

4. Verbindungsorgan nach Anspruch 3, dadurch gekennzeichnet, daß die Lagermulde (26) mit einem senkrecht zur Schwenkachse (25) des Schwenkankers (19) orientierten Führungsschlitz (24) für den Schwenkanker (19) versehen ist.

5. Verbindungsorgan nach Anspruch 4, dadurch gekennzeichnet, daß der Schwenkanker (19) im wesentlichen T-förmig ausgebildet ist.

6. Verbindungsorgan nach Anspruch 4 oder 5, dadurch gekennzeichnet, daß der Schwenkanker (19) einen zwei Schwenkzapfen bildenden Querbalken (20), einen sich hieran anschließenden im Führungsschlitz (24) geführten flachen Längsbalken (21) und sich hieran anschließende seitlich über den Führungsschlitz (24) vorstehende Führungsschultern aufweist.

7. Verbindungsorgan nach Anspruch 6, dadurch gekennzeichnet, daß die Lagermulde (26) eine den Querbalken (20) des Schwenkankers (19) aufnehmende Tasche bildet.

8. Verbindungsorgan nach einem der Ansprüche 2 bis 7, dadurch gekennzeichnet, daß eine (15) der in die die Lasche (19) umgreifenden Zinken (11,12) der Gabel angeordneten Bohrungen (13,15) als eine einen ersten Anschlag für den mit Spiel in den ihm zugeordneten Bohrungen (13,14,15) geführten Haltebolzen (16) bildende Blind- oder Stufenbohrung ausgebildet ist.

9. Verbindungsorgan nach Anspruch 8, dadurch gekennzeichnet, daß die andere (13) der in die die Lasche (9) umgreifenden Zinken (11,12) der Gabel angeordneten Bohrungen (13,15) eine Querbohrung (17) zur Auf nahme eines einen zweiten Anschlag für den Haltebolzen (16) bildenden Sicherungsstiftes (18) aufweist.

10. Verbindungsorgan nach einem der Ansprüche 1 bis 9, dadurch gekennzeichnet, daß sein Grundkörper (1,27, 33,34,35,37,41,43,46) die Form eines Bügels hat.

11. Verbindungsorgan nach Anspruch 10, dadurch gekennzeichnet, daß die Schenkel (4,5) des Bügels in das Bügelinnere ragende Führungsnasen (6,7) für einen Gurt oder eine Seilschlinge (8) aufweisen.

12. Verbindungnsorgan nach Anspruch 10 oder 11, dadurch gekennzeichnet, daß der Abstand zwischen den Schenkeln (4,5) des Bügels sich in der Nähe der Schenkelenden unter Bildung von Führungsnasen (6,7) für einen Gurt oder eine Seilschlinge (8) sprungartig vergrössert.

13. Verbindungsorgan nach einem der Ansprüche 1 bis 12, dadurch gekennzeichnet, daß das Schließelement (2) einen Stützbalken für einen Gurt oder eine Seilschlinge (8) bildet.

14. Verbindungsorgan nach Anspruch 13, dadurch gekennzeichnet, daß die Breite (B) des Schließelementes (2) größer als die Breite (b) des Grundkörpers (1) ist.

15. Verbindungsorgan nach einem der Ansprüche 1 bis 13, dadurch gekennzeichnet, daß sein Grundkörper (27) U-förmig ausgebildet und mit einem Joch (28) versehen ist, das einen Stützbalken für einen Gurt oder eine Seilschlinge (8) bildet dessen Breite (B) größer ist als die Breite (b) der Schenkel (4,5) des Grundkörpers (27).

16. Verbindungsorgan nach einem der Ansprüche 1 bis 15, dadurch gekennzeichnet, daß sein Grundkörper (33,34, 35,37) mit einer Gabel, einer Lasche, einer Öse, einem Haken, einem Zapfen, einer Klaue od.dgl. zum Anschluß eines Bauteiles versehen ist.

17. Verbindungsorgan nach einem der Ansprüche 1 bis 16, dadurch gekennzeichnet, daß sein Schließelement (29) mit einer Gabel, einer Lasche, einer Öse, einem Haken, einem Zapfen, einer Klaue od.dgl. zum Anschluß eines Bauteiles versehen ist.

18. Verbindungsorgan nach einem der Ansprüche 1 bis 10, dadurch gekennzeichnet, daß sein Grundkörper (53) die Form eines eine durch das Schließelement (52) verschließbare Einführöffnung aufweisenden Ringes hat.

19. Verbindungsorgan nach Anspruch 18, dadurch gekennzeichnet, daß der Ring oval ist.

20. Verbindungsorgan nach Anspruch 18 oder 19, dadurch gekennzeichnet, daß ein Ende des die Einführöffnung begrenzenden Teiles des Ringes als Lasche (9) und das andere Ende des die Einführöffnung begrenzenden Teiles des Ringes als Schwenkanker (19) ausgebildet ist.

21. Verbindungsorgan nach Anspruch 20, dadurch gekennzeichnet, daß am als Schwenkanker ausgebildeten Ende eine zur Sicherung des Schließelementes (52) in der Schließstellung dienende Sicherungsnase (54) angeordnet ist.

22. Verbindungsorgan nach einem der Ansprüche 1 bis 21, dadurch gekennzeichnet, daß es einen Adapter zum Anschluß von Kettensträngen (48) mit Gliedern kleinerer Nenndicke an Zwischen- oder Aufhängeglieder (49) größerer Nenndicke bildet.

23. Verbindungsorgan nach einem der Ansprüche 1 bis 22, dadurch gekennzeichnet, daß sein Grundkörper (1,27, 33,34,35,37,41,43,46,53) und sein Schließelement (2,29,47,52) als Schmiedeteile ausgebildet sind.

0302818

Fig.1

Fig. 2

Fig. 3

0302818

Fig. 4

Fig. 6

Fig. 5

0302818

Fig. 7

Fig. 9

Fig. 8

0302818

Fig. 11

Fig. 10

Fig. 12

0302818

Fig. 13

Fig. 14

Fig. 15

Fig. 16

Fig. 17

**Fig.19**

**Fig. 18**

**Fig. 20**

0302818

Fig. 22

Fig. 21